# EUROPÄISCHE PATENTSCHRIFT

(11) **EP 2 711 939 B1**
(45) Veröffentlichungstag und Bekanntmachung des Hinweises auf die Patenterteilung: **31.12.2014**
(21) Anmeldenummer: 12185493.9
(22) Anmeldetag: 21.09.2012
(51) Int. Cl.: H01C 7/12, H02H 9/04

(54) **Leitungsableiter**
Line arrester
Limiteur de surtension

(43) Veröffentlichungstag der Anmeldung: 26.03.2014
(73) Patentinhaber: Siemens Aktiengesellschaft, 80333 München (DE)
(72) Erfinder: Sulitze, Markus, 14612 Falkensee (DE); Gottschalk, Ingo, 10715 Berlin (DE)

(56) Entgegenhaltungen:
- EP-B1- 1 138 050
- WO-A1-99/50942
- DE-B- 1 132 207

## Beschreibung

Die Erfindung betrifft einen Leitungsableiter gemäß dem Oberbegriff des Patentanspruchs 1.

In Gegenden mit hoher Erdblitzdichte besteht eine besonders hohe Gefahr für Freileitungen in exponierten Lagen, wo Blitzeinschläge in Masten oder Freileitungen zu verstärkten Fehlern im Stromversorgungsnetz führen. Das Ergebnis sind häufige kurze Stromausfälle oder sogar Kurzschlüsse zwischen den Phasen verschiedener Systeme.

Leitungsableiter stellen eine kostengünstige Möglichkeit dar, um solche Probleme zu verhindern oder effektiv zu minimieren. Solche Leitungsableiter werden an einem Strommast parallel zu einem Isolator installiert. Dabei wird ein Ende des Leitungsableiters mit einer Hoch- oder Mittelspannung führenden Freileitung verbunden. Das andere, erdseitige Ende wird mit einem Erdkabel mit Erdpotential verbunden, beispielsweise mit dem Strommast, der seinerseits geerdet ist. Tritt eine Überspannung beispielsweise durch einen Blitzeinschlag in die Freileitung auf, so wird diese durch den Leitungsableiter zur Erde hin abgeleitet.

Häufig werden Leitungsableiter an der Freileitung hängend montiert. Diese können dann durch äußere Kräfte, wie sie durch Wind oder Erdbeben auftreten, zu Schwingungen um den Befestigungspunkt an der Freileitung angeregt werden. Dies ist unerwünscht, da es zum Einen zu mechanischen Belastungen des Leitungsableiters führt und zum Anderen das Erdpotential führende Ende des Leitungsableiters so nahe an die Freileitung gelangen kann, dass der notwendige Isolationsabstand unterschritten ist. Deswegen ist es notwendig, Schwingungen des Leitungsableiters so weit wie möglich zu dämpfen.

In der EP 1 138 050 B2 wird dies erreicht, indem am erdseitigen Ende des Leitungsableiters ein Gewicht angebracht wird. Dadurch wird jedoch die Baulänge des Leitungsableiters erhöht.

Der vorliegenden Erfindung liegt die Aufgabe zugrunde, einen Leitungsableiter anzugeben, der kompakte Abmessungen hat und dessen Schwingungen bei auftretenden äußeren Kräften gedämpft werden.

Die Aufgabe wird mit den Mitteln der Erfindung gemäß Patentanspruch 1 gelöst.

Dabei weist ein Leitungsableiter eine Ableitsäule auf, die an einer Freileitung hängend befestigbar ist. Die Ableitsäule kann dabei eine Schwingungsbewegung um den Aufhängepunkt ausführen. Die Ableitsäule weist ferner einen Koronaring auf. Erfindungsgemäß weist der Koronaring einen Bewegungskanal auf, in welchem eine längs des Bewegungskanals bewegliche Ausgleichsmasse angeordnet ist. Die Ausgleichsmasse ist dazu ausgebildet, sich bei Auslenkungen des Leitungsableiters aus der Ruhelage, längs entlang des Bewegungskanals entgegen des Auslenkrichtung zu bewegen. Wird der Leitungsableiter beispielsweise durch Wind aus seiner meist senkrechten Ruhelage ausgelenkt und in Schwingung versetzt, so wird sich die Ausgleichsmasse in dem Bewegungskanal aufgrund der Trägheit ihrer Masse längs des Bewegungskanals relativ zum Koronaring in die entgegen gesetzte Richtung der Auslenkung bewegen. Durch die innere Reibung der Ausgleichsmasse und die Reibung der Ausgleichsmasse mit der Wand des Bewegungskanals wird kinetische Energie der Auslenkbewegung in Wärme umgesetzt. Die Auslenkbewegung des Leitungsableiters wird dadurch gedämpft.

Vorteilhaft ist der Koronaring an einem freien Ende der Ableitsäule angeordnet. Das freie Ende der Ableitsäule ist dabei das dem Aufhängepunkt gegenüberliegende Ende, also das, welches bei Bewegung die größte Auslenkung aus der Ruhelage erfährt. Durch diese Anordnung wirkt die Ausgleichsmasse besonders effektiv als Schwingungsdämpfung.

In einer besonders vorteilhaften Ausführung der Erfindung ist der Bewegungskanal ein Ringkanal. In einem innerhalb des Koronarings umlaufenden Ringkanal ist der Bewegungsspielraum der Ausgleichsmasse besonders groß. Auch größere Auslenkungen aus der Ruhelage können somit effektiv gedämpft werden.

In einer weiteren vorteilhaften Ausgestaltung der Erfindung weist die Ausgleichsmasse einen oder mehrere feste Bestandteile auf. Die Ausgleichsmasse besteht also aus einem oder mehreren Stoffen, die bei den typischen Temperaturen zwischen cirka -20° Celsius und 40° Celsius einen festen Aggregatzustand einnehmen. Die Ausgleichsmasse kann dabei einteilig oder mehrteilig sein, wobei die Teile gleiche oder verschiedene Zusammensetzungen haben können. Beispielsweise könnte die Ausgleichsmasse aus Stahlkugeln und Gummikugeln bestehen, wobei die Stahlkugeln und die Gummikugeln abwechselnd entlang des Bewegungskanals angeordnet sind. Die Stahlkugeln liefern dabei die notwendige Masse, die Gummikugeln sorgen für die notwendige Reibung und Dämpfung.

Im Folgenden ist immer bei der Verwendung der Mehrzahl "Bestandteile" auch die Einzahl "Bestandteil" gemeint.

Des Weiteren sieht eine vorteilhafte Ausgestaltung der Erfindung vor, dass die festen Bestandteile als Schüttgut ausgebildet sind. Beispielsweise könnte die Ausgleichsmasse aus Sand, Eisenpulver oder einem Granulat bestehen. Hierbei wäre die Reibung der Ausgleichsmasse besonders hoch.

In einer besonders vorteilhaften Ausgestaltung der Erfindung sind die festen Bestandteile durch Roll- oder Gleitelemente gebildet. Dies können Kugeln oder Walzen sein, die sich in dem Bewegungskanal rollend bewegen können oder aber zylinderförmige Gleitelemente, die sich in dem Bewegungskanal gleitend bewegen. Hierdurch ist eine besonders gute Beweglichkeit der Ausgleichsmasse gewährleistet.

In einer weiteren Ausgestaltung der Erfindung weist die Ausgleichsmasse einen oder mehrere flüssige Bestandteile auf. Die Ausgleichsmasse besteht also aus einem oder mehreren Stoffen, die bei den typischen Temperaturen zwischen cirka -20° Celsius und 40° Celsius einen flüssigen Aggregatzustand einnehmen. Insbesondere viskose Flüssigkeiten eignen sich hierfür besonders gut, da sie eine besonders hohe Reibung zwischen Ausgleichsmasse und Wand des Bewegungskanals gewährleisten.

Die flüssigen Bestandteile können beispielsweise Wasser oder Glycerin oder eine Salzlösung oder eine Zuckerlösung oder Öle oder Ester oder eine ionische Flüssigkeit sein, oder eine Mischung davon sein. Wasser ist besonders umweltschonend und leicht handhabbar, benötigt jedoch je nach Witterungsbedingungen Zusätze wie Frostschutz. Salz- und Zuckerlösungen benötigen solche Zusätze nicht und können in der Dichte leicht variiert werden. Öle und Ester, wie beispielsweise Rapsmethylester, sind in der Hochspannungstechnik zum Beispiel als Isolationsmedien eingesetzt und eignen sich für breitere Temperaturbereiche. Ionische Flüssigkeiten sind gut in ihrer Dicht und ihrer Viskosität einstellbar und können deshalb gut auf den speziellen Anwendungsfall angepasst werden.

Besonders vorteilhaft weist die Ausgleichsmasse feste und flüssige Bestandteile auf. Die flüssigen Bestandteile können dabei dazu ausgebildet sein, eine Bewegung der festen Bestandteile zu dämpfen. Beispielsweise könnten sich Stahlkugeln, in einem ölgefüllten Bewegungskanal bewegen. Hierdurch wäre eine besonders günstige Kombination von Masse und Dämpfung der Ausgleichsmasse möglich.

Im Folgenden wird die Erfindung anhand der Zeichnungen näher erläutert. Dabei zeigen:
- Figur 1: einen an einer Freileitung installierten Leitungsableiter,
- Figur 2: das erdseitige Ende eines Leitungsableiters,
- Figur 3: eine weitere Ausführungsform des erdseitigen Endes eines Leitungsableiters,
- Figur 4: einen Schnitt durch einen Koronaring eines erfindungsgemäßen Überspannungsableiters,

Einander entsprechende Teile sind in allen Figuren mit den gleichen Bezugszeichen versehen.

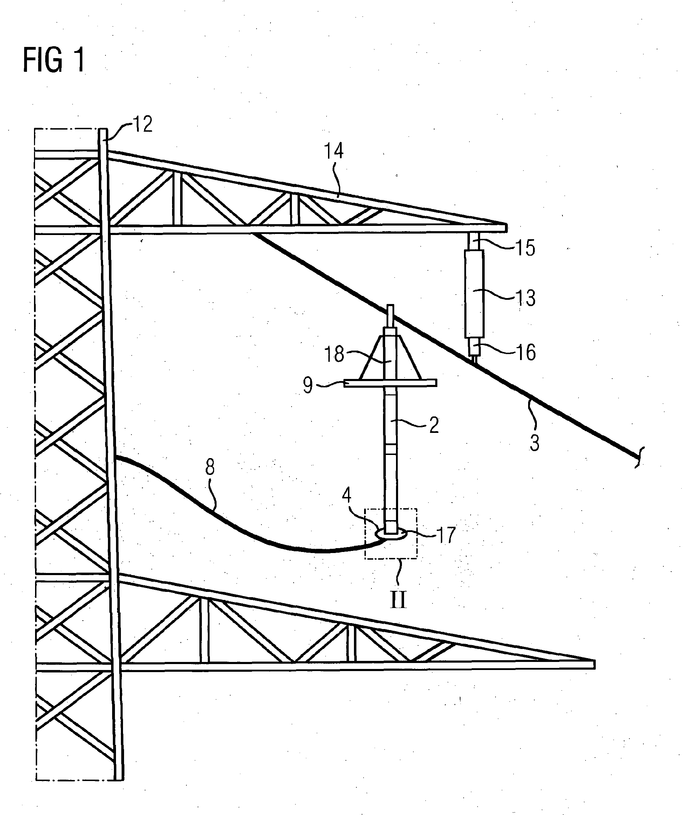

Die Figur 1 zeigt eine Freileitung 3, die mittels eines Isolators 12 an einem Mastausleger 14 eines Strommastes 12 befestigt ist. Die Freileitung 3 ist dabei ein elektrischer Leiter, der eine Hoch- oder Mittelspannung führt. Die Freileitung 3 ist dazu oberirdisch an Strommasten 12 aufgehängt. Meist werden an einem Strommast 12 mehrere solcher elektrischen Leiter, die zum Beispiel unterschiedliche Phasen tragen können, aufgehängt. Die Strommasten 12 liegen in der Regel auf Erdpotential. Zur Isolation der spannungsführenden Freileitung 3 gegen das Erdpotential ist die Freileitung 3 durch einen Isolator 13 vom Mastausleger 14 beabstandet aufgehängt. Der Isolator 13 ist dabei an einem Ende mit einer Armatur 15 am Mastausleger 14 befestigt und trägt am anderen Ende eine Aufhängearmatur 16 für die Freileitung 3.

Ohne weitere Schutzmaßnahmen besteht bei Blitzeinschlägen in den Strommast 12 oder die Freileitung 3 die Gefahr, dass einer der Isolatoren 13 zerstört wird und Stromausfälle oder Kurzschlüsse auftreten. Um dies zu verhindern, ist hier ein Leitungsableiter 1 elektrisch parallel zum Isolator 13 angeordnet. Der Leitungsableiter 1 weist dabei eine aus einem spannungsabhängigen Widerstand bestehende Ableitsäule 2 auf, die von zwei Endarmaturen begrenzt ist. Die Ableitsäule 2 wirkt dabei bei Spannungen, wie sie im normalen Betrieb der Freileitung 3 auftreten, als Isolator. Treten Überspannungen auf, die beispielsweise durch Blitzeinschläge ausgelöst werden können, so wird der elektrische Widerstand der Ableitsäule 2 herabgesetzt, sie wird besser leitend. Zur mechanischen Stabilisierung werden häufig Zugelemente wie Glasfaserstäbe zwischen den Endarmaturen 17, 18 eingespannt. Zum Schutz gegen Umwelteinflüsse ist die Ableitsäule 2 mit einem wetterfesten und elektrisch isolierenden Gehäuse beispielsweise aus Silikon oder Porzellan umgeben. Die obere Endarmatur 18 ist mittels einer Befestigungsvorrichtung mit der Freileitung 3 mechanisch und elektrisch verbunden. Der Leitungsableiter hängt von der Freileitung 3 herunter. Sein unteres Ende mit der unteren Endarmatur 17 kann um den Befestigungspunkt mit der Freileitung 3 schwingen. Diese Schwingung kann auch auf bestimmte Richtungen beschränkt sein. So kann die Befestigungsvorrichtung so ausgestaltet sein, dass Schwingungen des Leitungsableiters 1 nur in Richtung der Freileitung 3 oder auch nur senkrecht dazu möglich sind. Am unteren, dem erdseitigen Ende des Leitungsableiters 2, ist an der Endarmatur 17 ein Erdkabel 8 angebracht, das zum Beispiel über eine Verbindung mit dem Strommast 12 mit Erdpotential verbunden ist. Zwischen der Endarmatur 17 und dem Erdkabel 8 kann noch eine Abtrennvorrichtung 7 angeordnet sein, die das Erdkabel 8 im Falle eines Fehlers im Leitungsableiter 1 abtrennt.

Koaxial zur Ableitsäule 2 und beabstandet von der oberen Endarmatur 18 ist um die Ableitsäule ein Steuerring 9 angeordnet. Dieser ist mit Streben 18 an der oberen Endarmatur 18 befestigt und 9 dient der Vergleichmäßigung der Spannungsverteilung über die Baulänge der Ableitsäule 2.

Am erdseitigen Ende des Leitungsableiters 2 ist um die Endarmatur 17 ein Koronaring 4 angeordnet und mit Streben 18 an der Endarmatur 17 befestigt. Der Koronaring 4 dient als vereinfachter Faradayscher Käfig der Abschirmung von oft scharfkantigen Befestigungselementen in der Umgebung der Endarmatur 17. Steuerring 9 und Koronaring 4 haben zwar unterschiedliche Aufgaben, sind konstruktiv jedoch sehr ähnlich.

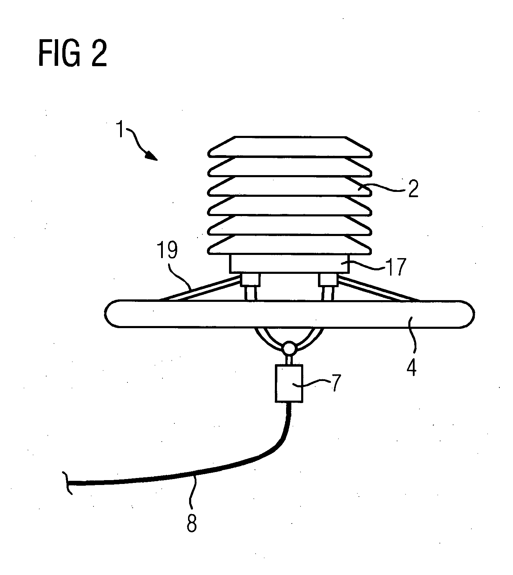

Die Figur 2 zeigt den vergrößerten Ausschnitt um das erdseitige Ende des Leitungsableiters 1.

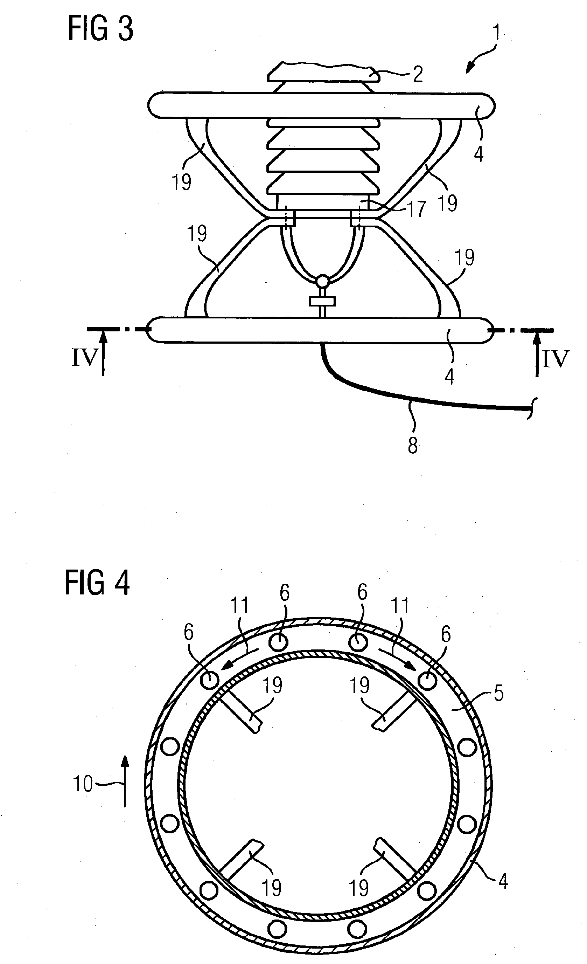

Die Figur 3 zeigt einen ebensolchen Ausschnitt wie Figur 2, mit einem Ausführungsbeispiel mit einem doppelten Koronaring. Hier sind zwei koaxiale Koronaringe 4 an der erdseitigen Endarmatur 17 befestigt.

In der Figur 4 ist ein radialer Schnitt durch einen Koronaring gezeigt. Der Koronaring 4 ist ein hohler Ring mit einem umlaufenden Ringkanal. Dieser dient als Bewegungskanal 5 für eine Ausgleichsmasse 6. Die Ausgleichsmasse 6 ist hier als eine Mehrzahl von Kugeln dargestellt, wobei nur einige Kugeln beispielhaft gezeigt sind. Die Ausgleichsmasse kann allerdings auch aus einem Schüttgut wie Sand oder einer Flüssigkeit bestehen. In den meisten Fällen ist es sinnvoll, dass der Ringkanal nur teilweise mit der Ausgleichsmasse 6 gefüllt ist, damit der Ausgleichsmasse 6 noch genügend Bewegungsspielraum bleibt. Falls die Ausgleichsmasse 6 jedoch aus einer Zusammensetzung einer Flüssigkeit und eines Feststoffes besteht, beispielsweise Stahlkugeln und Öl, so kann die Flüssigkeit den Bewegungskanal 5 vollständig füllen.

In dem Ausführungsbeispiel nach Figur 3 können beide Koronaringe 4 Bewegungskanäle 5 mit Ausgleichsmassen 6 enthalten, oder aber auch nur einer der Koronaringe 4. Außerdem kann auch der Steuerring 9 mit einem Bewegungskanal 5 und einer Ausgleichsmasse 6 versehen sein. In diesem Fall ist der Steuerring 9 ein Koronaring 4 im Sinne der Erfindung.

Im Ruhezustand hängt der Leitungsableiter 1 von der Freileitung 3 senkrecht nach unten. Da die Ausgleichsmasse 6 sich frei in dem Bewegungskanal 5 bewegen kann, wird sie sich gleichmäßig verteilen. Wirkt nun eine äußere Kraft in Richtung des Pfeils 10 auf den Leitungsableiter 1, so wird er in diese Richtung ausgelenkt. Die Ausgleichsmasse 6 wird sich wegen der Massenträgheit im Bezugssystem des Koronarings 4 entlang der Pfeile 11 und entgegen der Richtung der einwirkenden Kraft 10 entlang des Bewegungskanals 5 bewegen. Besteht die Ausgleichsmasse 5 aus mehreren Teilen, wie in Figur 4 hier durch drei Kugeln dargestellt, so werden je nach ihrer Ausgangslage einige Kugeln 6 sich in einer Richtung den Bewegungskanal 5 entlang bewegen, andere in der entgegen gesetzten Richtung. Ist die Auslenkung groß genug, werden die sich in unterschiedliche Richtungen entlang des Bewegungskanals 5 bewegenden Kugeln 6 sich am entgegen gesetzten Ende des als Ringkanal ausgebildeten Bewegungskanals 5 aufeinander zu bewegen und schließlich aneinander stoßen. Durch Reibung der Kugeln 6 aneinander und an der Wand des Bewegungskanals 5 sowie durch Stöße der Kugeln 6 aneinander und an die Wand des Bewegungskanals 5 wird die Bewegung des Leitungsableiters 1 gedämpft. Schwingt der Leitungsableiter 1 zurück und über die Ruhelage hinaus, bewegt sich die Ausgleichsmasse 6 in entgegengesetzter Richtung und dämpft die Bewegung wiederum. Der Mechanismus der Dämpfung mit Schüttgut oder Flüssigkeiten ist derselbe, wie mit Kugeln als Ausgleichsmasse 6. Bei Flüssigkeiten als Ausgleichsmasse 6 ist jedoch zu beachten, dass solche mit einer geeigneten Viskosität verwendet werden. Insbesondere bei zu niedriger Viskosität wird die Flüssigkeit in dem Bewegungskanal umher schwappen, ohne dass die Bewegung gedämpft wird. Unter Umständen kann durch Resonanzeffekte die Bewegung sogar verstärkt, statt gedämpft werden.

Als besonders gut geeignet haben sich Ausgleichsmassen 6 erwiesen, die aus Metallkugeln, beispielsweise aus Stahl oder Blei, und einer Flüssigkeit wie Transformatorenöl erwiesen. Die Kugeln haben dabei einen Durchmesser, der etwa 90% des Durchmessers des Bewegungskanals entspricht, so dass das Öl an den Kugeln vorbei strömen kann. Die Metallkugeln liefern hierbei durch ihre hohe Dichte eine besonders hohe Masse, das Öl sorgt für eine besonders hohe Reibung, so dass eine besonders,effektive Dämpfung der Bewegung des Leitungsableiters 1 erreicht wird.

## Patentansprüche

1. Leitungsableiter (1) mit einer Ableitsäule (2), die an einer Freileitung (3) hängend befestigbar ist, wobei durch die Ableitsäule (2) eine Schwingungsbewegung ausführbar ist, und mit einem mit der Ableitsäule (2) verbundenen Koronaring (4),
**dadurch gekennzeichnet,**
**dass** der Koronaring (4) einen Bewegungskanal (5) aufweist, in welchem eine längs des Bewegungskanals (5) bewegliche Ausgleichsmasse (6) angeordnet ist.

2. Leitungsableiter (1) nach Anspruch 1,
**dadurch gekennzeichnet,**
**dass** der Koronaring (4) an einem freien Ende der Ableitsäule (2) angeordnet ist.

3. Leitungsableiter (1) nach einem der Ansprüche 1 oder 2,
**dadurch gekennzeichnet,**
**dass** der Bewegungskanal (5) ein Ringkanal ist.

4. Leitungsableiter (1) nach einem der Ansprüche 1 bis 3,
**dadurch gekennzeichnet,**
**dass** die Ausgleichsmasse (6) einen oder mehrere feste Bestandteile aufweist.

5. Leitungsableiter (1) nach Anspruch 4,
**dadurch gekennzeichnet,**
**dass** die festen Bestandteile als Schüttgut ausgebildet sind.

6. Leitungsableiter (1) nach Anspruch 3,
**dadurch gekennzeichnet,**
**dass** die festen Bestandteile durch Roll- oder Gleitelemente gebildet sind.

7. Leitungsableiter (1) nach einem der Ansprüche 1 bis 6,
**dadurch gekennzeichnet,**
**dass** die Ausgleichsmasse (6) einen oder mehrere flüssige Bestandteile aufweist.

8. Leitungsableiter (1) nach Anspruch 7,
**dadurch gekennzeichnet,**
**dass** die flüssigen Bestandteile Wasser oder Glycerin oder eine Salzlösung oder eine Zuckerlösung oder Öle oder Ester oder eine ionische Flüssigkeit aufweisen.

9. Leitungsableiter (1) nach einem der Ansprüche 1 bis 8,
**dadurch gekennzeichnet,**
**dass** die Ausgleichsmasse (6) feste und flüssige Bestandteile aufweist.

10. Leitungsableiter (1) nach Anspruch 9,
**dadurch gekennzeichnet,**
**dass** die flüssigen Bestandteile dazu ausgebildet sind, eine Bewegung der festen Bestandteile zu dämpfen.

## Claims

1. Line arrester (1) with a discharge column (2), which can be fastened in a suspended manner to an overhead line (3) such that the discharge column (2) can perform an oscillating movement, and with a corona ring (4) connected to the discharge column (2), **characterized in that** the corona ring (4) has a movement channel (5), arranged in which is a balancing mass (6) that is movable along the movement channel (5).

2. Line arrester (1) according to Claim 1, **characterized in that** the corona ring (4) is arranged at a free end of the discharge column (2).

3. Line arrester (1) according to either of Claims 1 and 2, **characterized in that** the movement channel (5) is an annular channel.

4. Line arrester (1) according to one of Claims 1 to 3, **characterized in that** the balancing mass (6) comprises one or more solid components.

5. Line arrester (1) according to Claim 4, **characterized in that** the solid components take the form of bulk material.

6. Line arrester (1) according to Claim 3, **characterized in that** the solid components are formed by rolling or sliding elements.

7. Line arrester (1) according to one of Claims 1 to 6, **characterized in that** the balancing mass (6) comprises one or more liquid components.

8. Line arrester (1) according to Claim 7, **characterized in that** the liquid components comprise water or glycerol or a salt solution or a sugar solution or oils or esters or an ionic liquid.

9. Line arrester (1) according to one of Claims 1 to 8, **characterized in that** the balancing mass (6) has solid and liquid components.

10. Line arrester (1) according to Claim 9, **characterized in that** the liquid components are designed to dampen a movement of the solid components.

## Revendications

1. Limiteur ( 1 ) de surtension ayant une colonne ( 2 ) de décharge, qui peut être fixée en étant suspendue à un câble ( 3 ) aérien, dans lequel un mouvement d'oscillation peut être exécuté par la colonne ( 2 ) de décharge et comprenant un anneau ( 4 ) à effet couronne relié à la colonne ( 2 ) de décharge,
**caractérisé**
**en ce que** l'anneau ( 4 ) à effet couronne a un canal ( 5 ) de déplacement, dans lequel est disposée une masselotte ( 6 ) de compensation mobile le long du canal ( 5 ) de déplacement.

2. Limiteur ( 1 ) de surtension suivant la revendication 1,
**caractérisé**
**en ce que** l'anneau ( 4 ) à effet couronne est disposé à une extrémité libre de la colonne ( 2 ) de décharge.

3. Limiteur ( 1 ) suivant l'une des revendications 1 ou 2,
**caractérisé**
**en ce que** le canal ( 5 ) de déplacement est un canal annulaire.

4. Limiteur ( 1 ) suivant l'une des revendications 1 à 3,
**caractérisé**
**en ce que** la masselotte ( 6 ) de compensation a un ou plusieurs constituants solides.

5. Limiteur ( 1 ) de surtension suivant la revendication 4,
caractérisé
les constituants solides sont sous la forme d'un produit en vrac.

6. Limiteur ( 1 ) de surtension suivant la revendication 3,
**caractérisé**
**en ce que** les constituants solides sont formés par des éléments de roulement ou de glissement.

7. Limiteur ( 1 ) suivant l'une des revendications 1 à 6,
**caractérisé**
**en ce que** la masselotte ( 6 ) de compensation a un ou plusieurs constituants liquides.

8. Limiteur ( 1 ) de surtension suivant la revendication 7,
**caractérisé**
**en ce que** les constituants liquides comprennent de l'eau ou de la glycérine ou une solution de sel ou une solution de sucre ou des huiles ou des esters ou un liquide ionique.

9. Limiteur ( 1 ) suivant l'une des revendications 1 à 8,
**caractérisé**
**en ce que** la masselotte ( 6 ) de compensation a des constituants solides et liquides.

10. Limiteur ( 1 ) de surtension suivant la revendication 9,
caractérisé
les constituants liquides sont constitués pour amortir un déplacement des constituants solides.
